# EUROPEAN PATENT APPLICATION

(11) **EP 4 303 200 A1**
(43) Date of publication of application: **10.01.2024**
(21) Application number: 22020317.8
(22) Date of filing: 05.07.2022
(51) Int. Cl.: C04B 7/44

(54) **METHOD OF AT LEAST PARTLY CALCINING A RAW MATERIAL IN A PROCESS OF PRODUCING A CEMENTITIOUS MATERIAL**

(71) Applicant: Holcim Technology Ltd, 6300 Zug (CH)
(72) Inventor: Seyler, Laurent, CH-5113 Holderbank (CH); Boes, Karl-Heinz, CH-5113 Holderbank (CH); Stoffel, Beat, CH-5113 Holderbank (CH)
(74) Representative: Keschmann, Marc

(57) **Abstract**

A method of at least partly calcining a raw material in a process of producing a cementitious material, comprising the steps of:
- providing a first calcination device that is heated by means of a plasma torch ejecting a plasma jet,
- introducing a flow of raw material into the first calcination device,
- at least partially calcining the raw material in the first calcination device,
wherein a first flow of a CO₂ rich gas containing at least 60 vol.-% CO₂ is fed to the plasma torch as a carrier gas for generating the plasma jet, and
wherein a second flow of a CO₂ rich gas containing at least 60 vol.-% CO₂ is mixed with the plasma jet in order to adjust the temperature and/or the shape of the plasma jet.

## Description

The invention relates to a method of at least partly calcining a raw material in a process of producing a cementitious material.

Cementitious materials are one of the principal ingredients of a concrete mixture. There are two types of cementitious materials: hydraulic cement and supplementary cementitious materials (SCMs). Hydraulic cements set and harden by reacting chemically with water, which is called hydration. Portland cement is the most common hydraulic cement. SCMs are used in conjunction with Portland cement in concrete mixtures. In particular, it has become common practice to use pozzolanic and/or latent hydraulic material as supplementary cementitious materials in Portland cement mixtures.

By substituting supplementary cementitious materials for Portland cement the specific emission of CO₂ in the production of cement will be reduced. Supplementary cementitious materials comprise a broad class of siliceous or siliceous and aluminous materials which, in finely divided form and in the presence of water, chemically react with calcium hydroxide at ordinary temperature to form compounds possessing cementitious properties. Examples of supplementary cementitious materials include granulated blast-furnace slag, fly ash, natural pozzolans, burnt oil shale, or calcined clay.

In known processes for producing cement clinker, raw material is fed into a rotary kiln after it has been preheated and partially decarbonated in a multistage preheater system by using the heat of combustion gases exhausted from the rotary kiln. The preheated raw material is fed into the rotary kiln via the kiln inlet and travels to the kiln outlet while being calcined at temperatures of up to 1400°C.

Carbon dioxide (CO₂) is the most significant long-lived greenhouse gas in the Earth's atmosphere. The use of fossil fuels and deforestation have rapidly increased its concentration in the atmosphere, leading to global warming. Carbon dioxide also causes ocean acidification, because it dissolves in water to form carbonic acid.

The cement industry is an important emitter of CO₂. Within the cement production process, significant amounts of CO₂ are generated during the decarbonation of raw meal (containing CaCO₃) to lime (CaO). During the production of Portland cement clinker about 0,9 tons of CO₂ per ton of Portland cement clinker are emitted by the calcination of the raw materials and from the fuel combustion in the rotary kiln.

The use of alternative fuels, in particular renewable fuels, in the rotary kiln burner may reduce the amounts of greenhouse gases. However, substantial amounts of CO₂ are still produced by the decarbonation of raw meal and emitted into the atmosphere.

It has been proposed to use carbon capture and sequestration methods in order to reduce or prevent the emission of CO₂ from industrial processes into the atmosphere. Such methods comprise capturing CO₂ from flue gases for storage or for use in other industrial applications. However, such methods require the separation of CO₂ from the flue gases, wherein respective separation plants involve high capital and operating expenditures.

It has already been proposed to use electrical energy to decarbonize raw material instead of burning fossil fuels. This enables the reduction of the CO₂ footprint of the production of cementitious material, as electricity has a lower CO₂ footprint than fossil or alternative fuels. Another advantage is that the exhaust gas from the electrically operated decarbonize process is substantially pure CO₂, so that the process limits the requirement to separate CO₂ from flue gases. Rather, the exhaust gas (CO₂) drawn off from the thermal reactor may directly be used in a CO₂ processing, utilization, or sequestration unit.

For example, EP 4015479 A1 discloses a process, wherein a plasma torch may be used to decarbonize raw material by means of electrical energy. However, using a plasma torch generates a high amount of heat, which has the undesired effect of quickly deteriorating the refractory bricks used to protect the inner surfaces of a calcination device, such as a precalciner of a cement manufacturing plant. The refractory bricks would then need to be replaced more frequently, which is not desirable as it increases the downtime of the cement production line, and increases maintenance costs, and increases the average annual energy consumption of the system. The deterioration of refractory bricks is particularly important at temperatures above 1800°C.

Furthermore, in order to achieve an optimal calcination of different types of cementitious materials, the temperature of the plasma torch and the position need to be controlled and adjusted. For example, producing a clinker requires higher calcination temperatures than producing pozzolanic materials such as a calcined clay. It is therefore desirable to be able to make use of one type of equipment that can be easily adapted to produce Portland clinker or to produce a pozzolanic material.

Therefore, the instant invention aims at overcoming these drawbacks by providing a method of calcining raw materials by means of electrical energy that can be easily adjusted to various types of raw material and that does not negatively affect the operating life of the refractory lining of the calcination device, nor the quality of the final clinker product.

In order to solve these objectives, the invention provides a method of at least partly calcining a raw material in a process of producing a cementitious material, comprising the steps of:
- providing a first calcination device that is heated by means of a plasma torch ejecting a plasma jet,
- introducing a flow of raw material into the first calcination device,
- at least partially calcining the raw material in the first calcination device,
   wherein a first flow of a CO₂ rich gas containing at least 60 vol.-% CO₂ is fed to the plasma torch as a carrier gas for generating the plasma jet, and
   wherein a second flow of a CO₂ rich gas containing at least 60 vol.-% CO₂ is mixed with the plasma jet in order to adjust the temperature and/or the shape of the plasma jet.

A plasma is a fundamental state of a gas that occurs when the gas is heated to temperatures of > 3000°C to form an ionized gas. Plasma is a mixture of electrons, ions and neutral particles and is the fourth aggregation state a material may have. In a plasma torch a thermal plasma is generated in a plasma generator. In the plasma generator, electrons accelerate between two electrodes, anode/cathode, to the extent that an electric arc occurs, which in turn heats up the carrier gas which is fed through the torch so that plasma is formed. Mostly DC is used since the plasma torch tends to be more stable and easier to control than with AC. As there are extremely high temperatures inside the plasma torch, normally there is some water cooling needed to protect the burner tube. The plasma is ejected at the tip of the burner at very high velocity near sonic velocity.

According to the invention, a CO₂ rich gas is used as the carrier gas for generating the plasma jet. Herein, a CO₂ rich gas is defined as a gas that contains at least 60 vol.-% CO₂, preferably at least 80 vol.-% CO₂. Preferably, the CO₂ rich gas may additionally contain H₂O, the H₂O content preferably being 5-30 vol.-%. The advantage of using a CO₂ rich gas is that it has a high specific heat capacity and is thus able to produce more heat. Another advantage of using a CO₂ rich gas as the gas carrier in the present method is that CO₂ and optionally H₂O is accruing in a cement manufacturing plant at a considerable concentration in the exhaust gas of the pre-calcination and calcination process. Such CO₂ gas can be recirculated to the plasma torch. Further, a CO₂ rich carrier gas allows to limit the concentration of O₂ and N₂, so that the formation of NOx in the plasma jet is suppressed.

The heat produced by a plasma torch can be adjusted by adjusting the flow of the CO₂ rich gas that is fed to the plasma torch as a carrier gas. Another option is to change the electric power of the plasma, wherein an increase of the electric power used to operate the plasma torch increases the heat produced.

The first flow of CO₂ rich gas may be injected into the plasma torch via one or several outlets. Preferably, the outlets for injecting the first flow are positioned in the plasma burner in such a way to optimise the gas velocities and heat profile.

According to the invention, a second flow of a CO₂ rich gas is mixed with the plasma jet in order to adjust the temperature and/or the shape of the plasma jet. The second flow CO₂ rich gas may be directed towards a mixing zone via one or several outlets. Preferably, the outlets are positioned around the plasma burner in such a way to optimise the gas velocities and heat profile. The second flow of CO₂ rich gas may be mixed with the plasma jet in a mixing zone that is downstream of the outlet of the plasma torch. The second flow of the CO₂ rich gas may be fed to the mixing zone as a jacket that surrounds the plasma torch or via several outlets that are arranged around the plasma torch. As the second flow of CO₂ rich gas has a lower temperature than the plasma jet, by increasing its flow, it is possible to adapt the shape and size of the torch flame and/or to reduce its temperature in the calcination device so as to adjust the calcination temperature to the specific requirements of the raw material. For example, producing a pozzolanic material and calcining a clay requires a lower temperature when compared to the calcination of calcium carbonate for obtaining a Portland cement.

Further, the second flow of CO₂ rich gas has the advantage of preventing the deposition of materials onto and below the plasma torch, and also concentrates the heat into the center of the calcination chamber. This also reduces the amount of heat that reaches the refractory bricks, therefore prolonging their lifetime.

In order to minimize the plasma heat effect on the refractories during heating up and operation of the calcination device, a water-cooled shell can be provided along a burning zone of the plasma torch and/or the ratio of the CO₂ rich gas to electrical power fed to the plasma torch can be increased. During operation the flame heat effect on the refractories may be minimized by direct injection of the raw material which has to be calcined into the plasma flame.

Another measure for controlling temperature comprises cooling the first calcination device externally, for example by installing a water-cooled shell around the wall or by integrating a water-cooling system into the wall of the first calcination device.

The person skilled in art may easily adjust the first and the second flows of CO₂ rich gas to have the desired temperature in the calcination device, while protecting the refractory bricks from the high thermal load. Preferably, the ratio of the first flow to the second flow of CO₂ rich gas is selected to be 20:1-1:1, preferably 3:1-1:1. Further, the sum of both flows may be adapted to the specific requirements. Preferably, the ratio of the sum of the first flow and the second flow of the CO₂ rich gas to the electric power used to operate the plasma torch is adjusted to 0.25-5.0, preferably from 1.0 to 3.0, expressed as kWh/Nm³.

As mentioned above, the CO₂ rich gas used for the first and/or the second flow may be taken from any local calcination or combustion processes, in particular from such processes that involve a decarbonation of the raw material. In this connection, a preferred embodiment of the invention provides that at least partly calcining the raw material comprises decarbonating a raw material that contains a metal carbonate, such as CaCO₃, thereby releasing CO₂ rich exhaust gas, wherein said CO₂ rich exhaust gas is drawn off from the first calcination device and at least partly used for said first and/or second flow of the CO₂ rich gas.

Preferably, the CO₂ rich exhaust gas is dedusted before being recycled to the plasma torch for use as a first and/or second flow of CO₂ rich gas. Further, the CO₂ rich exhaust gas may be cooled before being recycled to the plasma torch for use as a first and/or second flow of CO₂ rich gas. Further, the CO₂ rich exhaust gas may be subjected to a CO₂ purification process for obtaining a CO₂ enriched gas that is recycled to the plasma torch for use as a first and/or second flow of CO₂ rich gas.

Alternatively, the CO₂ rich exhaust gas may be captured and used separately, for example to be further purified for use as a high grade CO₂ gas, or converted into a fuel or a plastic, or any other carbon-containing chemical, or for any other carbon capture utilization, such as mineralization, and storage (CCUS) case.

Some raw materials, such as cement raw meal, require a pre-calcination step and a further calcination step. In this case, the pre-calcination is conducted in the first calcination device as described above. For the further calcination step, a preferred embodiment provides that the method further comprises introducing the partly calcined raw material into a second calcination device and further calcining the material in order to obtain a cementitious material, such as cement clinker. The further calcination step may be conducted at a higher temperature than the first calcination step.

Preferably, the first calcination device is a precalciner of a cement manufacturing plant and the second calcination device is rotary kiln of the cement manufacturing plant. A precalciner of a cement manufacturing plant is a calcination device that is arranged between the raw meal preheater, such as a preheater comprising at least one string of a plurality of cyclone suspension-type heat exchangers, and the rotary kiln. In the precalciner, the pre-heated raw meal is dispersed and suspended in a gas flow, while being at least partly calcined.

Preferably, the second calcination device is heated by electrical energy and/or by combusting a renewable fuel and/or by combusting hydrogen. For the production of cement clinker in a rotary kiln as the second calcination device, the kiln may be operated in an oxyfuel mode. This comprises using a O₂ rich gas, such as a gas having a O₂-content of > 30 vol.%, preferably > 50 vol.%, preferably > 70 vol.%, as combustion gas for combusting a fuel.

In a two-step calcination operation, wherein the first step is conducted by using a plasma torch, the degree of calcination carried out in the first calcination device and in the second calcination device may be varied. In this way, the amount of electrical calcination to the total calcination of the kiln system can be varied in a large range, thereby adapting to the availability of renewable electricity and the amount of CO₂ to be captured.

In order to enhance the energy efficiency, the flow of raw material may be preheated before being introduced into the first calcination device, wherein preheating is preferably carried out by bringing a heat exchanging fluid into a heat exchanging relationship with the raw material, while the heat exchanging fluid is cooled.

Preferably the waste heat from the first calcination device may be used to preheat the flow of raw material. In particular, a CO₂ rich exhaust gas may be withdrawn from the first calcination device, said exhaust gas preferably containing at least 80 vol.% CO₂, and said CO₂ rich exhaust gas may be used as said heat exchanging fluid to preheat the raw material.

The CO₂ rich exhaust gas, after having been used to preheat the raw material, still contains a considerable amount of thermal energy that may be used in various ways. For example, the CO₂ rich exhaust gas may be used in a waste heat recovery device in order to provide thermal energy to an external process or for further use within a cement manufacturing process, into which the method of the invention is integrated.

For example, H₂O vapor can be evaporated from water in a heat exchanger that is operated by the waste heat from the CO₂ rich exhaust gas. Said H₂O vapor may be fed to the plasma torch as a part of the carrier gas. Alternatively, the H₂O vapor used as a carrier gas may be generated by any other waste heat source existing in the clinker manufacturing plant.

In order to enhance the efficiency of the first calcination device, another preferred embodiment comprises introducing CO₂ rich exhaust gas into the first calcination device at a temperature of > 300°C, preferably > 500°C. This may reduce the electrical energy needed for operating the plasma torch, for example at times, where there is a shortage of electrical energy from renewable sources.

In this connection, a preferred embodiment provides that the CO₂ rich exhaust gas, preferably after having been used as the heat exchanging fluid, is re-heated in a heat storage and/or generating device and introduced into the first calcination device.

The heat storage device may be loaded with thermal energy by means of a heating device that is operated by electrical energy. In this way, the heat required for calcination may also be provided by adding high temperature CO₂ into the first calcination device that has been preheated electrically or with solar power. During availability of electrical energy, the heat storage device (e.g filled with heat absorbing material) can be filled using the electrical energy, or solar power. During times of shortage of renewable electrical energy, the recirculated stream of CO₂ rich gas may be passed through the heat storage device in order to heat the CO₂ rich gas to provide thermal energy to the calcination process.

Another method of using the CO₂ rich exhaust gas as a heat transfer medium to introduce thermal energy into the calcination process is to pass the CO₂ rich exhaust gas through a clinker cooler. In this connection, a preferred embodiment provides that the cementitious material is introduced into a cooling device, in which the CO₂ rich exhaust gas, preferably after having been used as the heat exchanging fluid, is used to cool the cementitious material, while the CO₂ rich exhaust gas is re-heated and then introduced into the second calcination device.

To sum up, the invention provides an efficient and flexible way of using electrical energy to calcine raw materials instead of burning fossil fuels, while also generating a CO₂ rich offgas. The concept can be easily integrated into existing and new clinker production plants and is scalable from 5-100% of raw material calcination. The process of the present invention reduces the use of fossil fuels and other alternative fuels which are traditionally used in the cement process. This enables the reduction of the CO₂ footprint of the production of cementitious material, as electricity has a lower CO₂ footprint than fossil or alternative fuels.

When producing Portland clinker from cement raw meal, the raw material may be subjected to a first heat treatment in the first calcination device at a first temperature of at least 650°C in order to obtain an at least partly decarbonated material and CO₂. Preferably, the raw material is heated to a temperature of 650-1000°C, preferably 650-900° in the first calcination device. In this way, the temperature within the first calcination device is selected in order to specifically decarbonate a limestone component within the raw material. This enables the production of an exhaust gas that is rich in CO₂ which can later be captured and either used as a raw material for the production of synthetic fuel, plastic, or organic components, or sequestrated or recycled to the plasma torch.

When producing Portland clinker from cement raw meal, the second step comprises introducing the at least partly decarbonated material into a second calcination device and subjecting the at least partly decarbonated material to a second heat treatment at a second temperature lying above the first temperature. The second calcination device may also be heated by electrical energy. Alternatively, the second calcination device may be heated by burning alternative or low CO₂ fuels or by other means.

The invention will now be described in more detail with reference to the attached drawings. Fig. 1 is a schematic illustration of a precalciner integrated into a cement manufacturing plant, Fig. 2 shows a partial view of a precalciner with a plasma torch, Fig. 3 is a schematic illustration of a plant layout of a cement manufacturing plant in a first embodiment, Fig. 4 is a schematic illustration of a plant layout of a cement manufacturing plant in a second embodiment, Fig. 5 is a schematic illustration of a plant layout of a cement manufacturing plant in a third embodiment and Fig. 6 is a schematic illustration of a plant layout of a calcination device for manufacturing calcined clay.

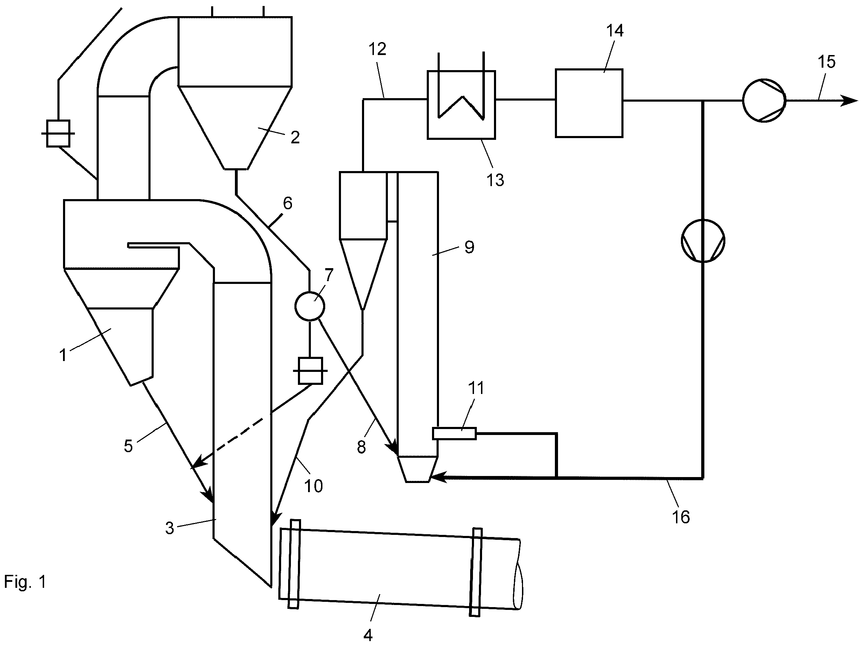

Fig. 1 shows a lower section of a preheater string comprising a plurality of suspension-type heat exchangers, namely a lowest heat exchanger 1 and a second lowest heat exchanger 2. An exhaust gas intake pipe 3 of the preheater is connected to the rotary kiln 4. Further, a cement meal outlet duct 5 of the lowest heat exchanger is connected to the inlet end of the rotary kiln 4 for feeding preheated raw meal into the rotary kiln 4. The second lowest heat exchanger 2 is also connected to the inlet end of the rotary kiln 4 via a cement meal outlet duct 6. The outlet duct 6 comprises a variable meal splitter 7 for feeding a variable amount of preheated raw meal into the precalciner 9 via the duct 8. The outlet of the calciner 9 is connected to the inlet end of the rotary kiln 4 via a duct 10 for feeding at least partly calcined raw meal into the rotary kiln 4.

The precalciner 9 is heated by means of a plasma torch 11, thereby at least partly decarbonating the preheated raw meal and releasing a CO₂ rich exhaust gas that is withdrawn from the calciner via the duct 12. The CO₂ rich exhaust gas is cooled in a heat exchanger 13, in order to provide waste heat for further use. Further, the CO₂ rich exhaust gas is dedusted in a dedusting filter 14. A partial flow of the dedusted CO₂ rich exhaust gas may be provided for further use at 15. Another partial flow of the dedusted CO₂ rich exhaust gas is recirculated via duct 16 and a first flow thereof is used as a carrier gas for the plasma torch 11 and a second flow thereof is fed into a mixing zone of the plasma torch 9, in order to adjust the temperature and the shape of the plasma jet ejected by the plasma torch 9.

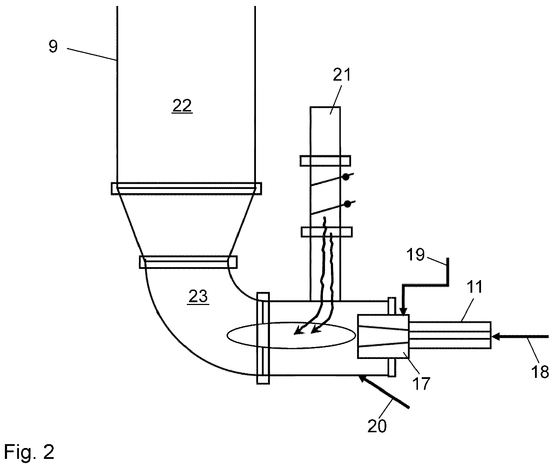

An exemplary embodiment of the precalciner 9 is shown in Fig. 2. The plasma torch 9 opens into the precalciner 9 via a tuyere 17. A feed duct 18 is connected to the plasma torch 9 in order to provide a first flow of a CO₂ rich gas as a carrier gas to the plasma torch. A second flow of CO₂ rich gas is preferably introduced via duct 19 and the tuyere 17 so as to be mixed with the plasma jet. An optional amount of a CO₂ rich gas may be introduced from below the plasma jet via the inlet duct 20, in order to keep the inlet of the precalciner 9 clean. Raw material is introduced into the precalciner 9 via the material feed 21 so as to be entrained by the plasma jet towards the calcining section 22 via the elbow section 23.

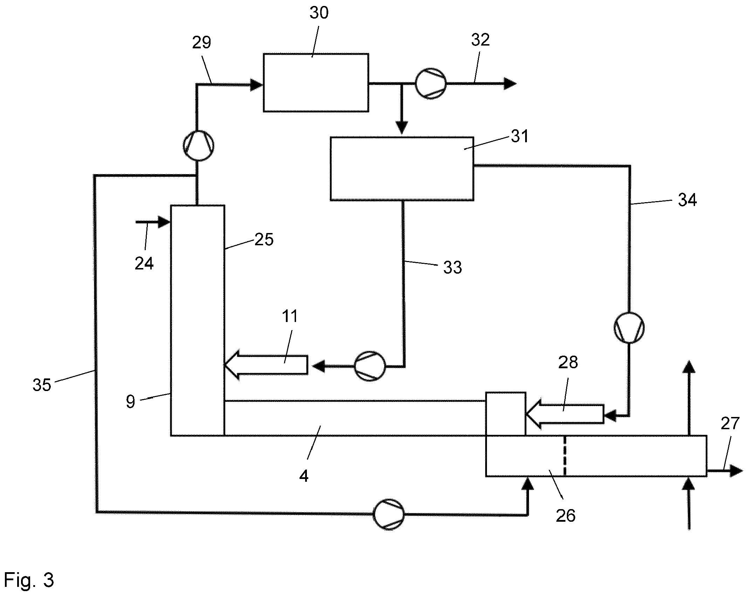

In a first embodiment of a plant layout for producing cement clinker shown in Fig. 3, cement raw meal is fed into a preheater string 25 at 24, preheated and then pre-calcined in a precalciner 9 that is connected between the lowest and the second lowest preheater of the preheater string 25. Preheating is carried out by means of the exhaust gas coming from the rotary kiln 4, in which the preheated and pre-calcined raw meal is further calcined in order to obtain cement clinker. The cement clinker is cooled in a clinker cooler 26, from which the cooled clinker is withdrawn at 27.

Both, the rotary kiln 4 and the precalciner 9 are heated by means of a plasma torch 9 and 28, respectively. In this way, the calcination process can be performed with electrical energy only. Because no fuel is burned neither in the rotary kiln 4 nor in the precalciner 9, the exhaust gas generated by the decarbonation of the raw meal is a CO₂ rich gas that is withdrawn from the preheater string 25 via duct 29. The CO₂ rich exhaust gas is led through a waste heat recovery device and a CO₂ purification unit, both schematically designated by 30. Essentially pure CO₂ may be withdrawn at 32 and fed to a carbon capture and sequestration method. A partial flow of the essentially pure CO₂ 31 is recirculated to the plasma torches 11 and 28 via the ducts 33 and 34, respectively.

Further, CO₂ rich exhaust gas may be branched off downstream of the preheater string 25 and fed to the clinker cooler 26 via the duct 35 for use as a cooling gas.

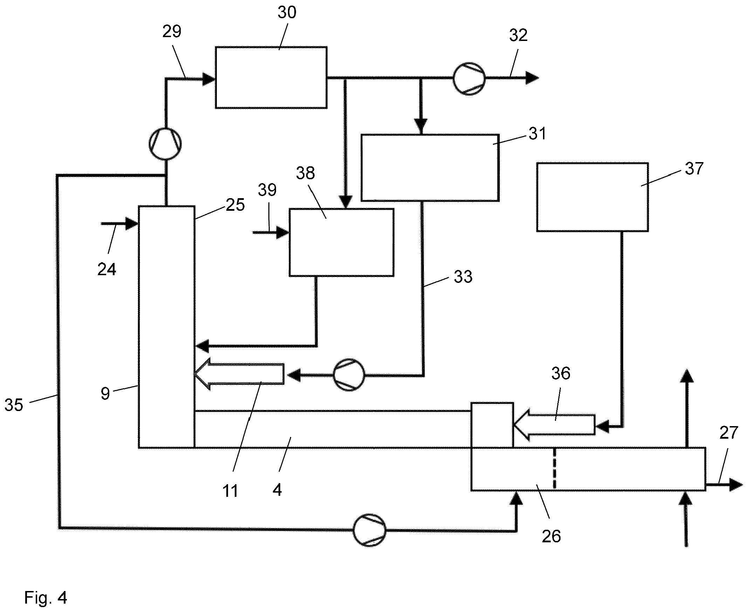

The second embodiment of the plant layout shown in Fig. 4 differs from the first embodiment in that the rotary kiln 4 is not heated by a plasma torch, but by combusting a fuel in a burner 36, the combustion gas being a O₂ rich gas, such as pure O₂, supplied from the storage 37. Further, a heat storage device 38 is provided, which can be heated by electrical energy 39, in particular electrical energy from a renewal source. The heat storage device 38 may be loaded with thermal energy at times of excess electrical energy being available, generated e.g. from solar power or wind power. At times of a shortage of electrical energy, such as during night, the CO₂ coming from the unit 30 can be guided through the heat storage device 38 and introduced into the calciner 9, in order to provide additional thermal energy to the precalciner 9, thereby being able to reduce the electric power supply of the plasma torch 11.

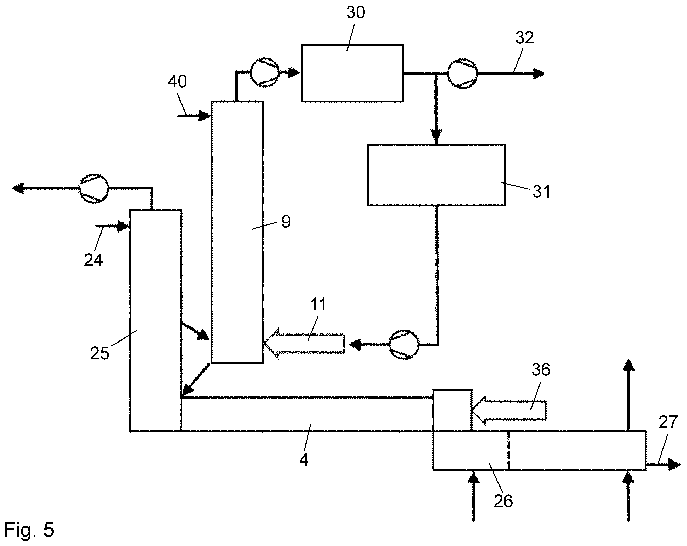

The third embodiment of the plant layout shown in Fig. 5 comprises a precalciner 9, the exhaust gas outlet of which is not connected to the preheater string 25. Rather, the preheater 25 is operated by the exhaust gas coming from the rotary kiln 4 only. In particular, the integration of the precalciner 9 is as shown in Fig. 1. Consequently, the precalciner 9 comprises its own raw meal feed 40. Further, the rotary kiln 4 is heated by means of a burner 36 that is provided with ambient air or a O₂ rich gas as the combustion gas. A renewable fuel or hydrogen can be used as a fuel for the burner 36.

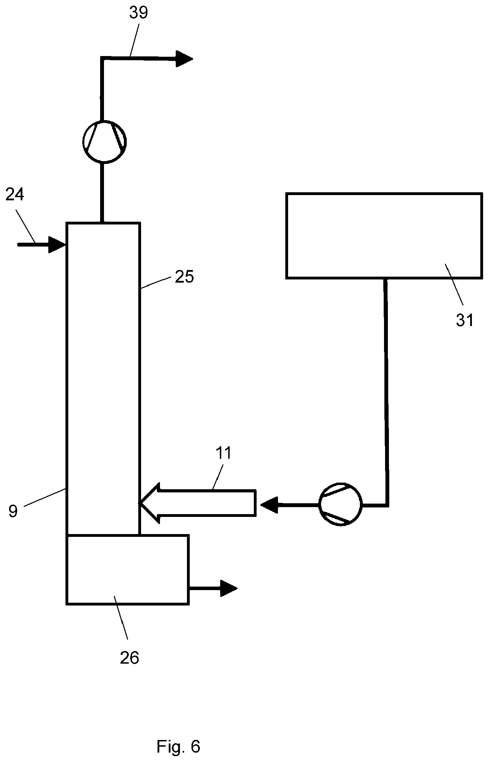

Fig. 6 shows a layout that comprises only a single calcination device. This layout is suitable for calcining clay or marl. The raw material is fed into the preheater 25 at 24 and the preheated material is calcined in the calcination device 9 that is heated by means of the plasma torch 11. Due to the nature of the raw material being, e.g. clay or marl, the exhaust gas leaving the preheater 25 does not contain excessive amounts of CO₂. Therefore, a separate source of CO₂ and optionally H₂O 31 is provided to be used as the carrier gas in the plasma torch 11.

## Claims

1. A method of at least partly calcining a raw material in a process of producing a cementitious material, comprising the steps of:
- providing a first calcination device that is heated by means of a plasma torch ejecting a plasma jet,
- introducing a flow of raw material into the first calcination device,
- at least partially calcining the raw material in the first calcination device,
wherein a first flow of a CO₂ rich gas containing at least 60 vol.-% CO₂ is fed to the plasma torch as a carrier gas for generating the plasma jet, and
wherein a second flow of a CO₂ rich gas containing at least 60 vol.-% CO₂ is mixed with the plasma jet in order to adjust the temperature and/or the shape of the plasma jet.

2. Method according to claim 1, wherein the CO₂ rich gas of the first flow and/or of the second flow of CO₂ rich gas additionally contains H₂O.

3. Method according to claim 1 or 2, wherein at least partly calcining the raw material comprises decarbonating a raw material that contains a metal carbonate, such as CaCO₃, thereby releasing CO₂ rich exhaust gas, wherein said CO₂ rich exhaust gas is drawn off from the first calcination device and at least partly used for said first and/or second flow of the CO₂ rich gas.

4. Method according to claim 1, 2 or 3, wherein the CO₂ rich gas of the first flow and/or of the second flow of CO₂ rich gas contains at least 80 vol.-% CO₂.

5. Method according to any one of claims 1 to 4, wherein the ratio of the sum of the first flow and the second flow of the CO₂ rich gas to the electric power used to operate the plasma torch is adjusted to 0.25-5.0, preferably from 1.0 to 3.0, expressed as kWh/Nm³.

6. Method according to any one of claims 1 to 5, wherein the method further comprises introducing the partly calcined raw material into a second calcination device and further calcining the material in order to obtain a cementitious material, such as cement clinker.

7. Method according to claim 6, wherein the first calcination device is a precalciner of a cement manufacturing plant and the second calcination device is rotary kiln of the cement manufacturing plant.

8. Method according to any one of claims 1 to 7, wherein the flow of raw material is preheated before being introduced into the first calcination device, wherein preheating is preferably carried out by bringing a heat exchanging fluid into a heat exchanging relationship with the raw material, while the heat exchanging fluid is cooled.

9. Method according to claim 8, wherein a CO₂ rich exhaust gas is withdrawn from the first calcination device, said exhaust gas preferably containing at least 80 vol.% CO₂, and said CO₂ rich exhaust gas is used as said heat exchanging fluid to preheat the raw material.

10. Method according to any one of claims 3 to 9, wherein the CO₂ rich exhaust gas is re-heated in a heat storage and/or generating device and introduced into the first calcination device.

11. Method according to claim 10, wherein the heat storage device is loaded with thermal energy by means of a heating device that is operated by electrical energy.

12. Method according to any one of claims 6 to 11, wherein the cementitious material is introduced into a cooling device, in which the CO₂ rich exhaust gas is used to cool the cementitious material, while the CO₂ rich exhaust gas is re-heated and then introduced into the second calcination device.

13. Method according to any one of claims 6 to 12, wherein the second calcination device is heated by electrical energy and/or by combusting a renewable fuel and/or by combusting hydrogen.

14. Method according to any one of claims 1 to 13, wherein the raw material consists of or comprises natural cement raw meal components, clay, waste materials such as recycled concrete material and/or a recycled plasterboard material, or industrial by-products.
